(19) Europäisches Patentamt
European Patent Office
Office européen des brevets

(11) **EP 1 568 179 B1**

(12) **EUROPEAN PATENT SPECIFICATION**

(45) Date of publication and mention
of the grant of the patent:
**23.07.2008 Bulletin 2008/30**

(21) Application number: **02792860.5**

(22) Date of filing: **02.12.2002**

(51) Int Cl.:
*H04L 12/56* (2006.01)     *G06F 15/173* (2006.01)

(86) International application number:
**PCT/EP2002/013625**

(87) International publication number:
**WO 2004/051939 (17.06.2004 Gazette 2004/25)**

(54) **METHOD AND APPARATUS TO INTEGRATE ROUTING BETWEEN ADMINISTRATOR OPERATED NETWORKS AND SELF-ORGANIZING NETWORKS**

VERFAHREN UND VORRICHTUNG ZUM INTEGRIEREN DER ROUTING ZWISCHEN VERWALTERBETREIBAREN NETZWERKEN UND SELBSTORGANISIERENDEN NETZWERKEN

PROCEDE ET APPAREIL D'INTEGRATION DE ROUTAGE ENTRE DES RESEAUX GERES PAR UN ADMINISTRATEUR ET DES RESEAUX D'AUTO-ORGANISATION

(84) Designated Contracting States:
**DE GB**

(43) Date of publication of application:
**31.08.2005 Bulletin 2005/35**

(73) Proprietor: **NTT DoCoMo, Inc.
Tokyo 100-6150 (JP)**

(72) Inventors:
• **PREHOFER, Christian
81477 München (DE)**
• **HOFMANN, Philipp
82205 Gilching (DE)**

(74) Representative: **HOFFMANN EITLE
Patent- und Rechtsanwälte
Arabellastrasse 4
81925 München (DE)**

(56) References cited:
• **NARTEN T: "INTERNET ROUTING" COMPUTER COMMUNICATIONS REVIEW, ASSOCIATION FOR COMPUTING MACHINERY. NEW YORK, US, vol. 19, no. 4, 1 September 1989 (1989-09-01), pages 271-282, XP000133129 ISSN: 0146-4833**
• **ALLIEDTELESYN: "Chapter 13 of Alliedtelsyn Switchblade product: OSPF" SWITCHBLADE MANUAL, [Online] 30 May 2002 (2002-05-30), XP002240752 Retrieved from the Internet: <URL: http://www.alliedtelesyn.co.nz/docume ntation/ switchblade/242/rm242.html> [retrieved on 2003-05-12]**
• **ALAETTINOGLU C ET AL: "RFC 2622: Routing Policy Specification Language" NETWORK WORKING GROUP REQUEST FOR COMMENTS, XX, XX, June 1999 (1999-06), pages 1-69, XP002239060**

**Description**

**FIELD OF INVENTION**

The present invention relates to integrated routing for administrator organized networks and self-organizing networks, e.g., integrated routing for the Internet and ad hoc networks.

**BACKGROUND OF INVENTION**

Routing is the task of finding a route from a transmitter to a destination in a communication network. Here, the route of a communication path should have a cost measure which is optimized according to a certain underlying cost metric. In other words, the costs of transmitting a data packet from the transmitter to the destination should be minimized.

Common costs metrics are hop count or delay along the communication path. If the cost metric is hop count, each link of the communication path is assigned a cost value of one. Further, if the cost metric is delay, each link of a communication path is assigned a cost in correspondence to the actual transmission delay of this link.

Yet another option for achieving routing is based on quality of service QoS routing protocols considering additional cost metrics representing a particular quality of service for a link in a communication path, e.g., an available throughput of the link. Quality of service Qos routing protocols allow for calculation of optimum routes with respect to simultaneous consideration of two or more different cost metrics. Using quality of service Qos routing protocols is of benefit at least for two reasons:

Firstly, one is that the routing will become more efficient; if hop count is the only used cost metrics, data packets will be discarded, if the shortest route to a destination is congested. However, if the available bandwidth is the cost metrics, another route with free capacity may be selected although it may consist of more hops.

Secondly, applications requiring certain quality of service Qos classes may be supported in a better way. A proposal for Qos routing protocol in the Internet is quality of service path first (QoSpf) as outlined in G. Apostolopoulos et al, Qos routing mechanisms and OSPF extension, IETF RFC 2676, August 1999. In particular, the quality of service path first Qospf routing protocol considers the hop count and available band width of links and calculates a shortest path for a required minimum band width.

Besides different examples for routing protocols given above, a typical example of an administrator organized network may be the Internet. In the Internet, commonly used routing protocols are the routing information protocol RIP as outlined in RIP Version 2, IETF RFC 2453 November 1998 or the open shortest path first OSPF Protocol as outlined in OSPF Version 2, IETF RFC 2328, April 1998.

Here, the routing information protocol RIP is a distance vector routing protocol where each router knows the distance, i.e., the costs of the optimum route, to the destination and further the next hop in the communication path.

Further, the open shortest path first OSPF Protocol is a link-state routing protocol where each router knows the complete topology of the communication network and one may calculate the optimum communication route using this information. In the Internet, routes are maintained to all nodes of the network and the routes are updated infrequently, as the topology does not change frequently.

Further Allied Telesyn exports metnics from RiP to OSPF and vice versa. [www. Allied telesyn.co.hz "Switchblade product" chapter 13. OSPF]

Further, recently self-organizing networks of mobile nodes have been introduced. Self-organizing networks do not rely on any infrastructure and are not controlled by any central administration. One example for such self-organizing networks are so-called ad hoc networks.

In self-organizing networks mobile nodes may move around, join and leave the self-organizing network in an arbitrary manner. Therefore, and contrary to the administrator organized networks, the topology of the self-organizing networks is changing permanently. Further, self-organizing networks typically exist only temporarily. Mobile nodes in self-organizing networks are acting, both,'as end nodes and routers, and data packets are typically relayed over multiple hops.

Due to the dynamic topology of self-organizing networks, the optimum route between two nodes is changing permanently. As a consequence, the routing information protocol RIP or the open-shortest path first OSPF protocol are not suitable for self-organizing networks. For this reason, additional routing protocols where self-organizing networks have been introduced, e.g., the ad hoc on demand distance vector routing protocol AODV for ad hoc networks, as explained in ad hoc on demand distance vector AODV, see IETF Internet Draft draft-ietf-manet-aodv-11-July 2002.

From the above, it becomes clear that due to the different characteristics of the administrator organized network and the self-organizing network and their related routing protocols, generally routing is performed separately in the two networks.

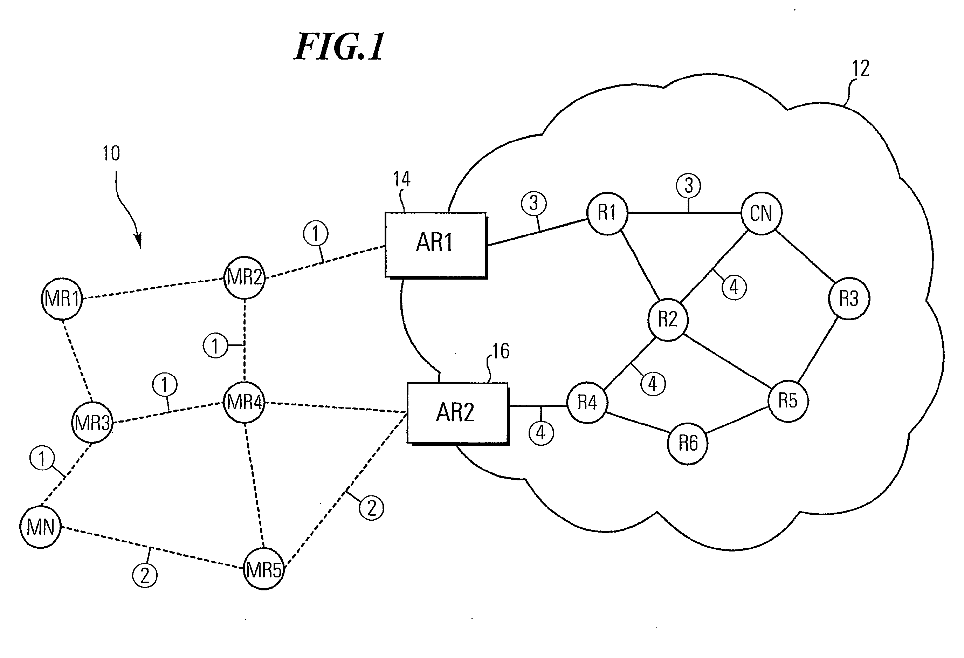

Heretofore, reference is made to Fig. 1 showing a schematic diagram of a routing environment underlying the present invention.

As shown in Fig. 1, the routing environment comprises a self-organizing network with a plurality of mobile routers MR1, ..., MR5, and a mobile node MN. Further, an administrator-organized network, e.g., the Internet, is coupled to the self-organizing network via access routers 14 and 16, respectively.

Having regard to the examples shown in Fig. 1, it may be assumed that a mobile node MN in the self-organizing network 10 sends data packets to a corresponding node CN in the administrator-organized network 12. The routing protocol of the self-organizing network will determine the optimum route between the mobile node and either access router 14 and 16 and then forward data packets via mobile routers MR1, ..., MR 5, accordingly.

Further, the routing protocol of the administrator organized network will determine the optimum route between either access routers 14 and 16 and then deliver the data packets via several routers R1 to R6, accordingly.

The implication of this independent determination of optimum routes in the self-organizing network and the administrator-organized network is shown in Fig. 1. In the self-organizing network a first option ① is MN, MR3, MR4, MR2, AR1, and a second option ② is MN, MR5, GW2. In view of the cost metric hop count, therefore, the shortest route ② will be the one to the access router 16.

As also shown in Fig. 1, in the administrator-organized network 12 again two options ③ and ④ exist for achieving a routing for the corresponding node CN and to either access router 14 or 16, respectively. A first option ③ would be CN, R1, AR1 having a hop counter of 2, while a second option ④ would be CN, R2, R4, AR2 having a hop count of 3.

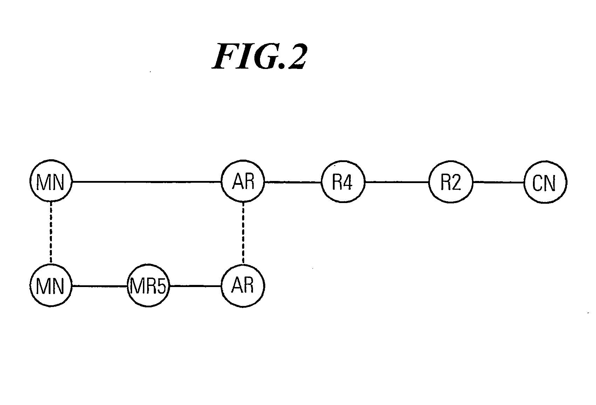

Fig. 2 shows an approach to overcome this deficiency as technological background to the present invention.

As shown in Fig. 2, to solve the problems outlined so far, it has been proposed that the mobile node in the self-organizing network also runs the routing protocol of the administrator-organized network, e.g., the Internet. Therefore, it will know the topology of the administrator-organized network and may calculate the optimum route with respect to an overall picture of the covered networks.

As also shown in Fig. 2, also access routers know about the mobile node. Data packets will be tunneled between the access router and the mobile node MN. Intermediate relaying mobile routers will not run the routing protocol of the administrator-organized networks.

As shown in Fig. 2, a disadvantage of this existing solution is that multi hop connections between the mobile node MN and the access routers appears as one hop in the routing protocol of the administrator organized network.

However, if the routing protocol for the administrator-organized network, e.g., the Internet, considers the multi hop connection between the mobile node and the access routers only as one hop, a first problem is that the actual number of hops or any other related cost measure between the mobile node MN and the access router will not be considered.

Further, any topology changes in the self-organizing network, which occur very frequently and affect the actual cost of the route between the mobile node and the access routers will not be considered.

While the former is a basic problem of accuracy of cost measure for routing between the mobile node MN and the access routers 12, 14, the latter is a problem when the mobile nodes in the self-organizing networks are mobile.

As a consequence, the optimum route between the mobile node MN in the self-organizing network and a corresponding node CN in the administrator-organized network will not be determined.

## SUMMARY OF INVENTION

In view of the above, the object underlying the present invention is to provide an integrated approach to routing across access routers provided to cover self-organizing networks and administrator-organized networks.

According to the present invention, this object is achieved by method of integrating routing between a self-organizing network running a first routing protocol and an operator-organized network running a second routing protocol. It is proposed to run the first routing protocol and the second routing protocol in parallel at the mobile node and the access router for evaluation of at least one communication path in the self-organizing network. Further, at least one first cost measure for a communication path in the self-organizing network will be calculated using information on a path route which is available from the routing protocol. Still further, the first cost measure is mapped to a second cost measure in accordance with the second routing protocol for subsequent optimized routing between the self-organizing network and the administrator-organized network.

An important advantage of the present invention is that it considers the actual topology of a path route in the self-organizing network which is available from the first routing protocol, or in other words, an accurate cost measure for evaluation of different communication paths in the self-organizing network.

Yet another important advantage is that the first cost measure is mapped to the second cost measure in accordance with the second routing protocol. In other words, the type of mapping is determined by the second routing protocol and allows to achieve flexibility in view of type of routing protocol used in the administrator organized network.

Overall, the inventive method of integrating routing allows for increased accuracy of cost measures and an abstraction into an extended network topology also for the self-organizing network for adaptation to the freely selectable second routing protocol. This is a prerequisite for optimized global communication across access router boundaries.

In particular, the present invention is particularly suited for a situation where a plurality of access routers are provided for coupling the self-organizing network and the administrator-organized network. Here, optimized routing may be achieving with improved redundancy and shared load among multiple access routers. Also, mobile nodes may choose an optimum access router depending on quality of service requirements of the related application, as the improved accuracy of used cost measures allows the consideration of such requirements.

According to a further preferred embodiment of the present invention it is proposed to combine the second cost measure with further cost measures according to communication path from the access routers to a corresponding node in the administrator organized network, and then to select an overall communication path from the mobile node to the corresponding node with minimum accumulated cost measure.

This preferred embodiment of the invention allows to achieve optimized end-to-end routing between a mobile node and a corresponding node when the self-organizing network is coupled to the administrator organized network using multiple access routers, and in particular the mobile node maintains communication path to all these access routers.

According to a further preferred embodiment of the present invention it is proposed to re-iterate the calculation of the first cost measure and the mapping of the first cost measure to the second cost measure on occurrence of a change of topology of the self-organizing network.

As outlined above, this approach is particularly suitable as the self-organizing network is abstracted into an extended network topology for adaptation to the second routing protocol. This means, that the topology of the extended network will be more time-constant than the actual topology of the underlying self-organizing network. Nevertheless, as an extended network topology is super-imposed on the underlying self-organizing network the re-iteration of cost-measured calculation and cost measure mapping allows for an accurate consideration of cost measures also in view of changing topologies of the self-organizing network.

Further, in view of the above it should be clear that the present invention is not restricted to any type of particular routing protocol either in the self-organizing network or the administrator-organized network. Therefore, any mapping using a functional relationship of cost measures for the first routing protocol and the second routing protocol are covered by the present invention.

Typical examples for such a mapping would be a one-two-one mapping, a scaled mapping, or a calculation of second cost measures from cost measures being available in the first routing protocol. Also, the present invention may be flexibly adapted to a situation where the number of cost measures being available and being used in the first routing protocol and the second routing protocol differ from each other.

According to another preferred embodiment of the present invention there is provided a computer program product directly loadable into the internal memory of a mobile node or an access router comprising software code portions for performing the inventive integrated routing process when the product is run on a processor of the mobile node or access router.

Therefore, the present invention is also provided to achieve an implementation of the inventive method steps on computer or processor systems. In conclusion, such implementation leads to the provision of computer program products for use with a computer system or more specifically a processor comprised in e.g., a mobile node of an self-organizing network or an access router.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or telephone networks via modems or other interface devices. It should be understood that such media, when carrying processor readable instructions implementing the inventive concept represent alternate embodiments of the present invention.

## BRIEF DESCRIPTION OF DRAWINGS

In the following different aspects of the present invention will be explained with reference to the drawings; in which

Fig. 1 shows a routing between a self-organized network and an administrator-organized network as technical background to the present invention;

Fig. 2 shows an approach to routing across access routers as technological background to the present invention;

Fig. 3 shows an illustration of the general principles underlying the present invention;

Fig. 4 shows the mapping of cost measures of a first routing protocol to cost measures of a second routing protocol using functional relationships;

Fig. 5    shows a schematic diagram of a routing apparatus according to the present invention;

Fig. 6    shows a flowchart of operation for the routing apparatus shown in Fig. 5;

Fig. 7    shows a schematic diagram of the cost processing unit shown in Fig. 5;

Fig. 8    shows a flowchart of operation of the cost processing unit shown in Fig. 7;

Fig. 9    shows a schematic diagram of the routing unit shown in Fig. 5;

Fig. 10    shows a diagram of routing tables used in the routing unit shown in Fig. 9;

Fig. 11    shows a flowchart of operation of the routing unit shown in Fig. 9;

Fig. 12    shows a diagram illustrating through-put and delay as a function of hop count according to the present invention; and

Fig. 13    illustrates recalculation and re-mapping of cost measure in view of a self-organizing network topology change.

## DETAILED DESCRITION OF THE PRESENT INVENTION

In the following, different aspects of the present invention as well as preferred embodiments thereof will be explained with reference to the drawings. Insofar, as reference is made to elements already explained above with respect to Fig. 1 or 2, the same reference numerals will be used and repeated explanation thereof will be omitted.

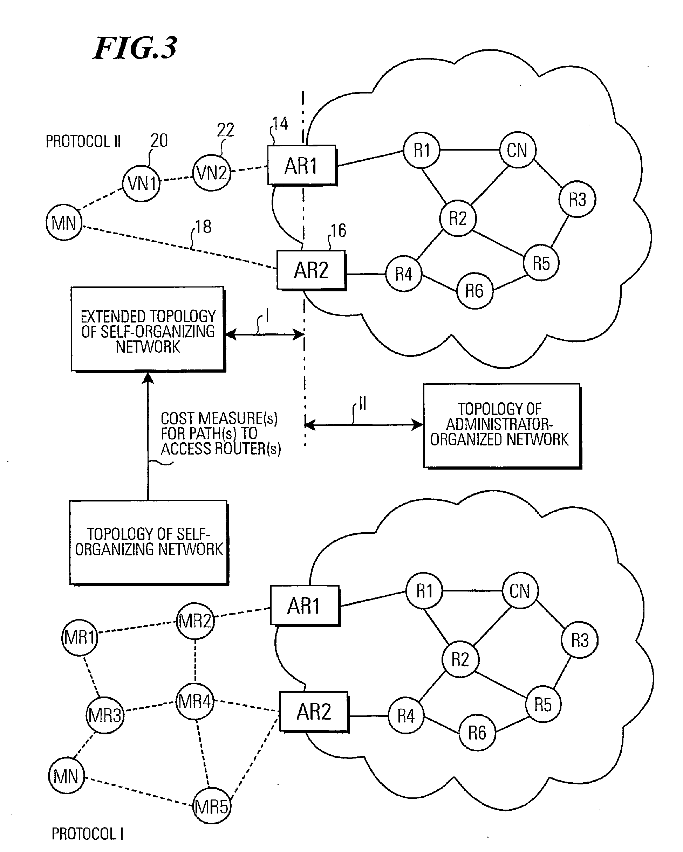

Fig. 3 shows an illustration of the general principles underlying the present invention.

As shown in Fig. 3, the inventive method of integrating routing between a self-organizing network running a first routing protocol and an administrator-organized network running a second protocol is based on a parallel operation of the related routing protocols both at the mobile node MN in the self-organizing network and any access routers 14, 16 provided for coupling the self-organizing network and the administrator-organized network.

Further, in view of the topology of the self-organizing network there is derived a cost measure considering a path route between the mobile node and any of the access routers 14, 16 using the first routing protocol.

Then, the first cost measure is mapped to a second cost measure in accordance with the second routing protocol for subsequent optimized routing between the self-organizing network and the administrator-organized network.

As also shown in Fig. 3, the second cost measure derived according to the path topologies from the mobile node to the access routers will be combined with further cost measures from the related access routers 14, 16 to a corresponding node CN in the administrator-organized network. Here, also the further cost measures for path routes in the administrator-organized network will be calculated considering the topology of the administrator-organized network.

As also shown in Fig. 3, according to the present invention it is proposed to abstract the self-organizing network into an extended network topology for adaptation to the second routing protocol.

Heretofore, a first option is to provide a virtual link 18 between the mobile node NM and the access routers and to assign the mapped cost measure to this virtual link. As will be explained in more detail in the following, this option is particularly suited for use combination with distance vector protocols.

As also shown in Fig. 3, another option is the introduction of virtual nodes 20, 22 into the virtual link between the mobile node and any of the access routers, which second option is particularly useful when the second protocol is a link state protocol, as will be explained in more detail in the following.

It should be noted, that the present invention is applicable to any type of first routing protocol and second routing protocol, respectively.

Examples for the first routing protocol types are distance vector routing protocol, link state routing protocol, source routing protocol, and/or link reversal protocol. Particular examples suitable for use in ad hoc networks are destination-sequence distance vector protocol DSDV, ad hoc on demand distance vector protocol AODV and dynamic source routing protocol DSR, temporally ordered routing algorithm TORA, topology broadcast based on reverse path forwarding TBRPF, and/or optimized link state routing OLSR.

Similarly, also the second routing protocol is not restricted to a specific type and may be, e.g., a distance vector routing protocol or a link state routing protocol.

Particular examples being related to the Internet would be a routing information protocol RIP, an open shortest path first protocol OSPF and/or a quality of service path first protocol QoSPF.

Irrespective of the particular type of first and second routing protocols, it should also be noted that the specific technology underlying the self-organizing network or the administrator-organized network may not construe a limitation to the present invention. Thus, the administrator-organized network may not only be the Internet, but any type of packet-switched network wherein data packets are transmitted according to routing protocols operated by the administrator of the data packet switched network.

Therefore, generally the present invention only requires the coupling of a self-organizing network and an administrator operated network through multiple access routers, as shown in Fig. 3. Here, different access routers may also provide access to the operator organized network using different technologies. Further, particular measures are taken by the mobile nodes in the self-organizing network to detect the access routers, e.g., solicitation or advertisement of access routers.

Also, the parallel operation of the routing protocols is executed, both, at the mobile node and the different access routers. Further, without restricting the scope of the present invention, it may be assumed that routing information is provided by the access routers and the mobile node MN to related neighbours for implementation of the routing decisions taking on the protocol level.

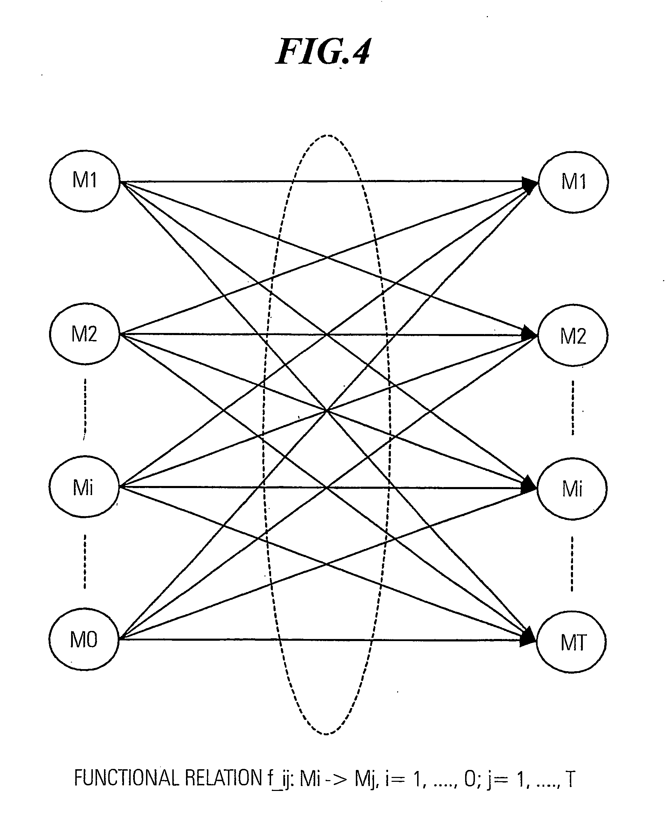

Further to the above, Fig. 4 illustrates aspects of the mapping of different cost measures between different protocol levels.

As shown in Fig. 4, one may assume that cost measures in view of the first routing protocol are calculated using a specific set of cost metrics. Similarly, the same also applies to the second routing protocol. Here, mapping of a first cost measure to a second cost measure in the most general sense implies use of the functional relationship from the first routing protocol to the second routing protocol.

A first example would be that the metric(s) used in the first routing protocol are identical to those used in the second routing protocol.

Alternatively, the present invention also covers a case where the set of cost metric(s) used in the first routing protocol differs from that used in the second routing protocol.

In any case, the use of the functional relationship for the mapping of cost measures implies either a one-to-one mapping of cost measures or a suitable calculation on cost measures for generation of further cost measures, as will be explained in detail in the following.

Still further, the present invention also relates to a case where the number of cost metrics underlying the calculation of the first cost measure may be higher than the number of cost metrics underlying the calculation of the second cost measure. Here, it is proposed to prune cost metrics underlying the calculation of the cost measure having no counterpart cost metric underlying the calculation of the second cost metric.

Alternatively, the present invention also relates to a case where the number of cost metrics underlying the calculation of the first cost measure is lower than the number of cost metrics underlying the calculation of the second cost measure. Here, it is proposed to evaluate cost metrics underlying the calculation of the second cost measure in view of those cost metrics which are available for the calculation of the first cost measure.

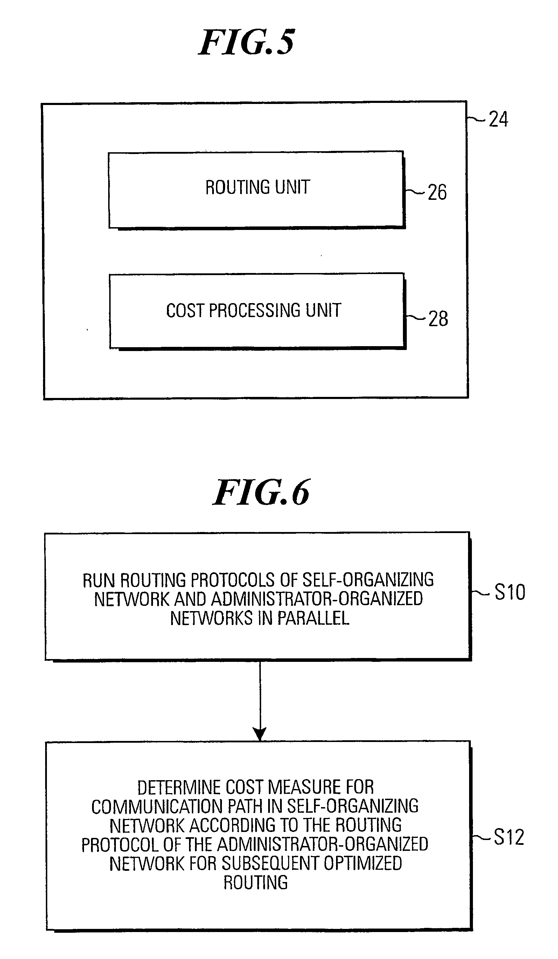

Fig. 5 shows a schematic diagram of a routing apparatus according to the present invention, i.e. the structure of the mobile node MN and any access routers 14, 16 shown in Fig. 3.

As shown in Fig. 5, the routing apparatus 24 comprises a routing unit 26 and a cost processing unit 28.

Fig. 6 shows a flowchart of operation of the routing apparatus 24 shown in Fig. 5.

As shown in Fig. 6, operatively the routing unit 26 will run routing protocols of the self-organising network and the administrator-organized networks in parallel in a step S10. Further, the cost processing unit 28 determines at least one cost measure for a communication path in the self-organising network according to the routing protocol used in the administrator-organized network for subsequent optimised routing in a step S12.

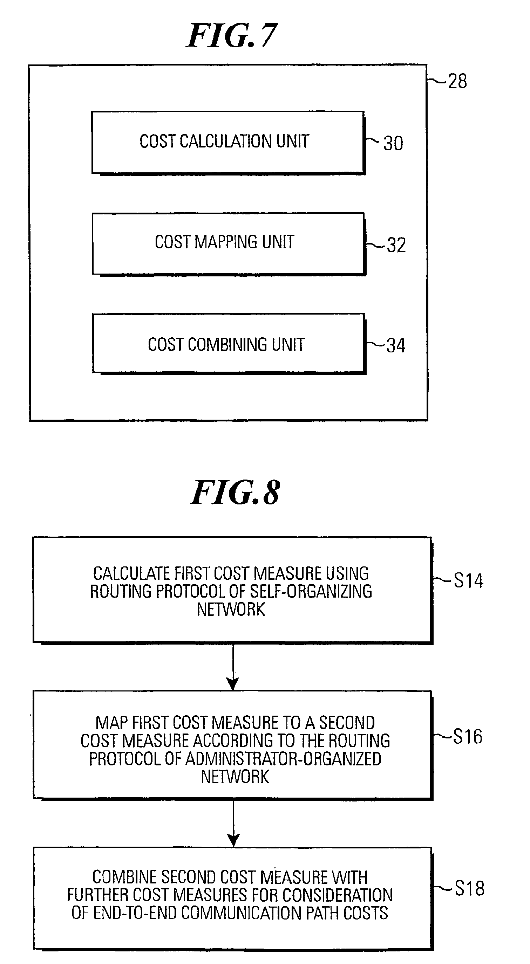

Fig. 7 shows a further detailed schematic diagram of the cost processing unit shown in Fig. 5.

As shown in Fig. 7, the cost processing unit 28 comprises a cost calculation unit 30, a cost mapping unit 32, and a cost combining unit 34.

Fig. 8 shows a flowchart of operation of the cost processing unit 28 shown in Fig. 7.

As shown in Fig. 8, operatively the cost calculation unit 30 calculates a first cost measure using the routing protocol of the self-organising network in a step S14. Further, the cost mapping unit 32 maps the first cost measure to a second cost measure according to the routing protocol used in the administrator-organized network in a step S16. Still further, the cost combining unit 34 is provided for combining the second cost measure with further cost measures for consideration of end-to-end communication path cost measures in a step S18.

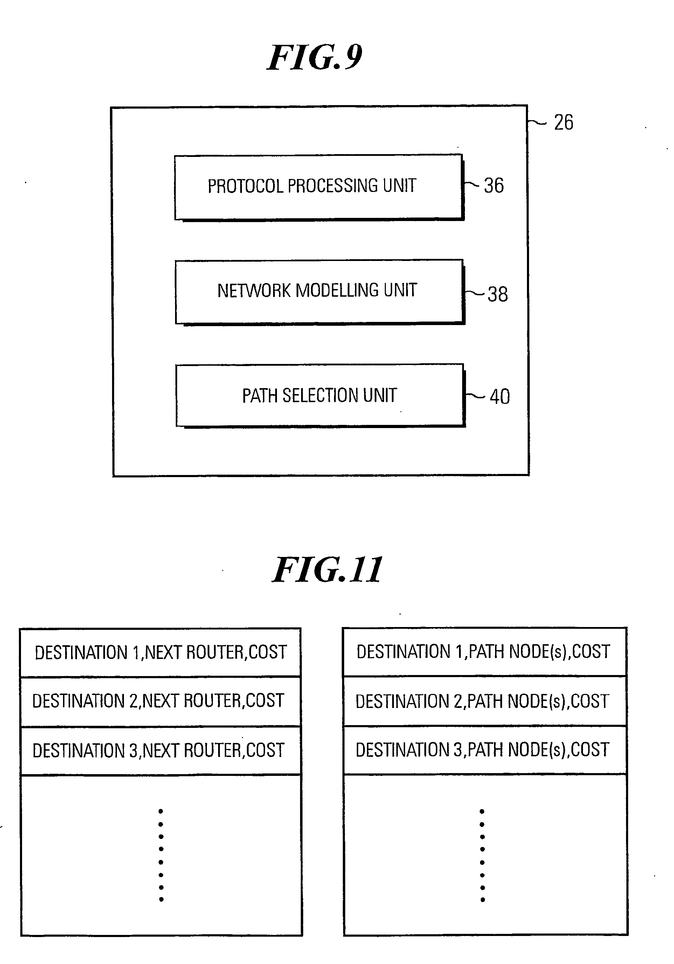

Fig. 9 shows a schematic diagram of the routing unit 26 shown in Fig. 5.

As shown in Fig. 9, the routing unit comprises a protocol processing unit 36, a network modelling unit 38, and a path selection unit 40.

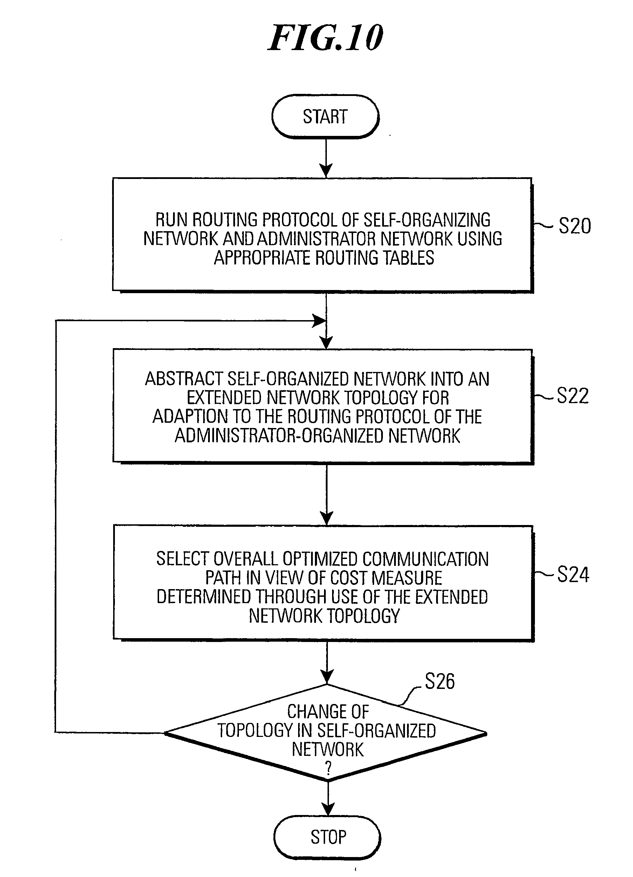

Fig. 10 shows a flowchart of operation of the routing unit 26 shown in Fig. 9.

As shown in Fig. 10, operatively the protocol processing unit runs routing protocols of the self-organising networks and the administrator-organized network in a step S20. Further, the network modelling unit 38 allows to abstract the self-organized network into an extended network topology, as outlined above with respect to Fig. 3, for adaptation to the routing protocol of the administrator-organized network, in a step S22. Still further, the path selection unit 40 selects an overall optimised communication path across access router in view of the cost measure determined through set-up of the extended network topology model in a step S24. Also, the different sub-units of the routing unit 26 are adapted to iterate related steps S22 and S24 on occurrence of a change of topology in the self-organized network, which change is determined by the network modelling unit 38 in a step S26.

For a better understanding of the following explanation of more detailed aspects of the present invention, Fig. 11 shows the structure of a distance vector protocol and a link state protocol being operated by the protocol processing unit 36 shown in Fig. 9.

As shown in Fig. 11, a distance vector protocol shown in the left part of Fig. 11 uses routing tables listing different destinations, the next router for reaching the destination, and a cost measure for the communication path to the different destinations.

Alternatively, a link state protocol, shown in the right part of Fig. 11, lists a plurality of destination, however, gives a dedicated information on the path node(s), and a cost measure for reaching the different destinations.

Therefore, the difference between distance vector protocols and link state protocols is that the distance vector protocol only considers the next router, while the link state protocol gives an overview on the complete network.

While above, the general structure of the present invention has been explained with reference to Figs. 3 to 10, in the following a detailed explanation of the type of cost measure determination and mapping between different cost measures will be given.

Heretofore, one should note that the particular type of first routing protocol is of subordinate importance as long as the determination of related cost measures and an appropriate mapping to the second routing protocol is assured, i.e., either according to the distance vector protocol or the link state protocol. Depending on the different operative conditions in the following multiple constellations of the present invention will be explained in detail.

For a first constellation the type of cost metric used for the determination of a cost measure under the first routing protocol and under the second routing protocol is assumed to be identical. Further, it is assumed that the routing unit 26 runs the second routing protocol as distance vector routing protocol. Then, the network modelling unit 38 will set up the extended network model with a node for the mobile node and a node for each access router, without insertion of intermediate virtual nodes.

Under this first constellation, a first cost metric may be hop count. Then, the mapping unit 32 will assign the hop count in a one-to-one relationship to the distance vector routing protocol. Alternatively, the mapping unit 32 may map a scaled hop count into the distance vector routing protocol. Yet another example would be that the first cost metric is delay in the self-organising network, and that the mapping unit 32 maps an accumulated delay value to the distance vector routing protocol. Yet another example would be that the first cost metric is throughput along a communication path in the self-organising network and that the mapping unit 32 maps a minimum throughput to the distance vector routing protocol.

A second constellation relates to a case where the protocol processing unit 36 runs the second routing protocol as link state routing protocol and where the cost metrics underlying the determination of the first cost measure and the second cost measure are identical.

Here, the network modelling unit 38 will set up the extended network with an appropriate number of virtual nodes along a path from the mobile node to each of the access routers, as shown in Fig. 3.

According to a first example where the first cost measure is determined as hop count, the mapping unit 32 achieves mapping through the introduction of the virtual nodes between the mobile node MN and the access router 14, 16 such that the number of additional virtual nodes VN1, VN2 is hop count minus one.

Further examples are related to cost metrics being different from hop count for use in the link state routing protocol. Here, no virtual nodes will be introduced by the network modelling unit 38, but the related first cost measure, e.g., delay, throughput, ETC, will be assigned directly to the link state protocol by the mapping unit 32 without insertion of virtual nodes. One such mapping could be achieved by an accumulated delay value to a virtual single link provided between the mobile node MN and each of the access routers. An alternative would be to map minimum throughput along a path in the self-organising network to such a single virtual link.

While above, a first and second constellation have been described for cases where the first cost metric underlying the calculation of the first cost measure is of the same type as that underlying the calculation of the second cost measure, in the following further aspects of the present invention will be explained for constellations where the first cost metric underlying the calculation of the first cost measure is of a different type than a second cost metric underlying the calculation of the second cost measure.

Also for the aspects with different cost metrics, again one may differ between a situation where a mapping is achieved to a distance vector protocol and a situation where a mapping is achieved to a link state protocol.

Further to the above, for the examples explained in the following the difference over previous constellations is that a second cost measure is not only achieved through direct mapping from a cost measure available from the first routing protocol, but that the cost calculation unit has to calculate the second cost measure in view of cost metrics being available for calculation of cost measures under the first routing protocol. This requires the processing of a functional relationship.

Typical examples for such functional relationships may be a proportional or an exponential correlation from variables describing a path characteristic in the self-organizing networks. Examples for such variables are hop count, delay, maximum through put, actual throughput, minimum throughput, error rate and/or jitter.

Using at least one of these variables the functional relationship may be a proportional correlation according to

| | | Hop Count H | Delay D | Throughput T | Error rate E |
|---|---|---|---|---|---|
| H | | - | $H = D/a$ | $H = b/(a \cdot T_{max})$ | $H = \log_{(1-f)}(1-E)$ |
| D | | $D = a \cdot H$ | - | $D = b/T_{max}$ | $D = a \cdot \log_{(1-f)}(1-E)$ |
| T | | $T_{max} = b/(a \cdot H)$ | $T_{max} = b/D$ | - | $T = b/(a \cdot \log_{(1-f)}(1-E))$ |
| E | | $E = 1 - (1-f)^H$ | $E = 1 - (1-f)^{(D/a)}$ | $E = 1 - (1-f)^{(b/(a \cdot T))}$ | - |

wherein the first row of the table represents variables of the functional relationship and further rows represent second cost measures expressed in the form of proportional correlations, H is a hop count, D is total delay, T is actual throughput, $T_{max}$ is a maximum throughput, e.g., 2 Mbit/s, a is a predetermined delay value per link in the self-organizing network which may be estimated or an average value, e.g., 0,1 sec, b is a product of delay value times maximal through put, E is error rate and f is a pre-determined error rate value per link.

Alternatively, the functional relationship may be an exponential correlation according to

| | | Hop Count H | Delay D | Throughput | T Error rate E |
|---|---|---|---|---|---|
| H | | - | $H = D/a$ | $H = 1 - \log_c(\dfrac{T - T_{min}}{T_{max} - T_{min}})$ | $H = \log_{(1-f)}(1-E)$ |
| D | | $D = a \cdot H$ | - | $D = a \cdot (1 - \log_c(\dfrac{T - T_{min}}{T_{max} - T_{min}}))$ | $D = a \cdot \log_{(1-f)}(1-E)$ |
| T | | $T = T_{min} + (T_{max} - T_{min}) \cdot c^{(1-H)}$ | $T = T_{min} + (T_{max} - T_{min}) \cdot c^{(1-(D/a))}$ | - | $T = T_{min} + (T_{max} - T_{min}) \cdot c^{(1-\log_{(1-f)}(1-E))}$ |
| E | | $E = 1 - (1-f)^H$ | $E = 1 - (1-f)^{(D/a)}$ | $E = 1 - (1-f)^{(1-\log_c(\frac{T-T_{min}}{T_{max}-T_{min}}))}$ | - |

wherein the first row of the table again represents variables of the functional relationship and further rows represent second cost measures expressed in the form of exponential correlations. Further, H is a hop count, D is total delay, T is actual throughput, $T_{max}$ is maximum throughput, $T_{min}$ is minimum throughput, a is again a pre-determined delay value per link for the self-organizing network, c is a number > 1, and f is a pre-determined error rate per link.

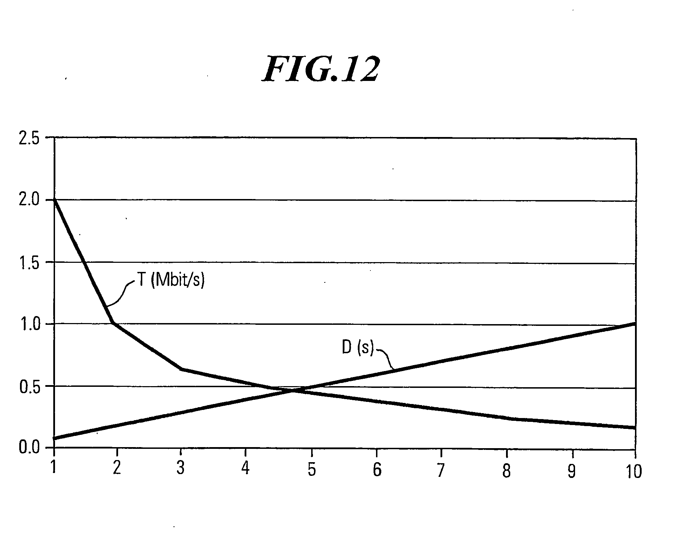

Fig. 12 shows a diagram illustrating throughput and delay as a function of hop count according to the exponential relation explained above.

As is apparent from the formulas given above, the higher the value of c, the steeper the slope of the curve T will be. Further, $T_{min}$ is the lower limit of T for H →∞, e.g., 10 % of $T_{max}$. Also, typically the delay along a path in the self-organizing network will increase in proportion to the number of hops.

Further to the functional relationships used for determination of a second cost measure as outlined above, a further option for determination of a second cost measure according to the present invention is storing a mapping of cost measures in tabular form, of what type ever, to at least one second cost measures for subsequent use in routing optimization. The advantage of using such a pre-stored, eventually manually configured mapping table is that the processing load on the cost calculation unit 30 shown in Fig. 7 may be reduced. The entries of the table may represent a mapping to any type of cost measure, e.g., hop count, delay, throughput, error rate, and/or jitter.

Yet another option for determination of the second cost measure is to trigger the sending of a special data packet between the mobile node MN and each access router in the self-organizing network for recording of link characteristics, e.g., through the cost measuring unit.

Alternatively, such a special data packet may also be transmitted from the access routers to the mobile node MN. In any case, the special,data packet may record, e.g., the time passed during transmission thereof, e.g., using time steps at transmission and reception. Such mechanisms are known, e.g., from TCP to determine round trip times.

Alternatively, the special data packet may be used to determine the throughputs of single links in the self-organizing network. It may determine maximum throughput of a link, depending on the radio technology, or the available throughput, depending on the link load.

Irrespective of the way which is used to determine the second cost measure, e.g., functional relation, table storing a relation between first cost measures and second cost measures, or sending of special data packets, the next step executed by the cost mapping unit 32 is then the mapping to the second routing protocol, as already outlined above.

Here, depending on the type of cost measure and the type of second routing protocol again different constellations occur.

According to a third such constellation the unit 26 runs the second routing protocol as distance vector routing protocol and the network modeling unit 38 sets up the extended network using one node for the mobile node and one node for each access router. The mapping unit 32 will then assign the previously calculated second cost measure to the distance vector routing protocol.

A fourth constellation occurs when the second routing protocol is a link state protocol and the determined second cost measure is hop count. Under such a constellation, again the cost mapping unit 32 will insert to map the hop count to the link state routing protocol through introduction of virtual nodes between the mobile node and the access router, where the number of additional virtual nodes is hop count minus one.

A fifth constellation occurs when the second routing protocol run by the protocol processing unit 36 is again the link state routing protocol, nevertheless, a second cost measure is different from hop count. In the latter constellation the mapping unit 32 will directly assign the generated second cost measure to the link state protocol without insertion of virtual nodes into the extended network model.

From the above, it should be clear that the mapping according to the present invention is achieved between two routing layers and depends on the type of routing protocol used in the upper level and the type of routing protocol used in the self-organizing network. The mapping is achieved in the form of an interface between the two routing protocols, so that the routing protocols themselves need not to be changed.

As has been outlined above, the two routing protocols not necessarily utilize the same type of routing as long as the mapping is performed at both ends of a multi hop connection in the self-organizing network. Further, it should be noted that the mapping has to be performed separately for each communication direction in the self-organizing network, i.e. from mobile node to access routers, and from each access router to the mobile node.

A further aspect of the present invention already outlined above is related to topology changes in the self-organizing network.

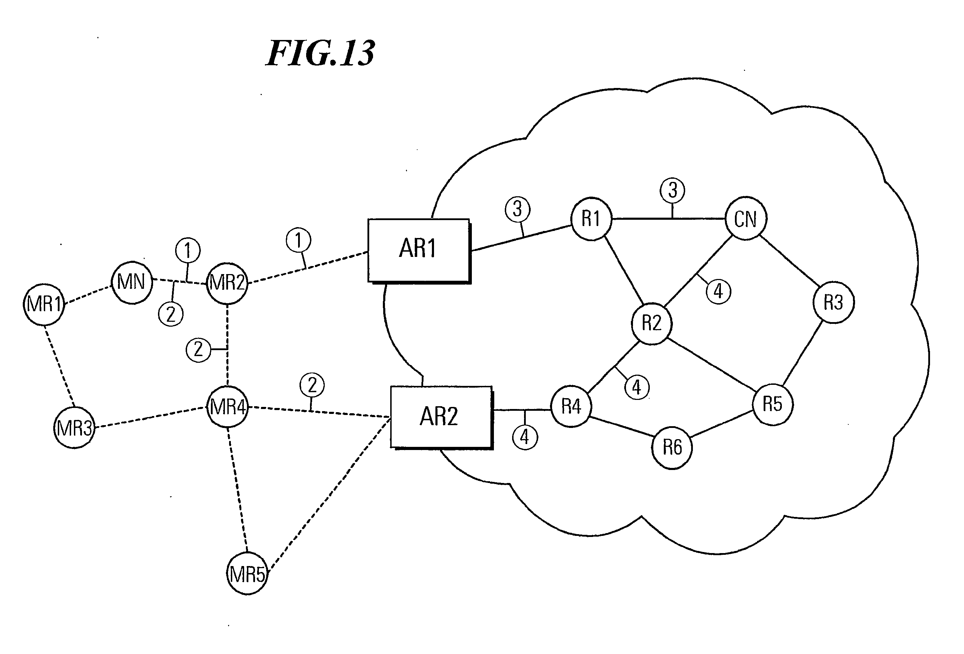

Fig. 13 shows one such example of topology change assuming that the cost measure is derived in view of hop count between the mobile node and the access routers. Here, the second routing protocol, e.g., the Internet routing protocol, must be informed about this topology change so that appropriate rerouting may be performed.

In the example shown in Fig. 13, after the topology change route ① is shorter than route ②, and therefore will be used for further communication between the mobile node NM and the corresponding node CN via route ③ instead of previously used route ④.

According to the present invention, to implement a handling of topology changes, the self-organizing network, e.g., an ad hoc network, will inform the access router on new candidates of relaying mobile nodes in the self-organizing networks and further whether old nodes do not relay data packets any more.

Here, a first case would be that the access routers will be informed about any route changes and new routes from the self-organizing network. In a further case the access routers will be informed about route changes, but not about complete new routes in the self-organizing network. In the latter case, the access routers will utilize some mechanism to get information about all relaying mobile nodes. There are three possibilities. Either, an access router sends a special packet along the route to the destination node that prompts intermediate nodes to contact the access router. For instance, the IPv6 hop-by-hop options header may be used for this purpose. Another approach would be that the access router sends a special packet in which the route is recorded. A mobile node MN then has to return the special data packet to the access router. Again, the IPv6 hop-by-hop options header may be used heretofore. Finally, each access router may also perform a trace route which requires the support of Internet control message protocol ICMP at all mobile nodes.

**Claims**

1. Method of integrating routing between a self-organizing network (10) running a first routing protocol and an administrator-organized network (12) running a second routing protocol, **characterized by** the steps:

   - abstracting the self-organizing network (10) into an extended network topology for adaptation to the second routing protocol;
   - running the first routing protocol and the second routing protocol in parallel for evaluation of at least one communication path in the self-organizing network;
   - calculating at least one first cost measure for a communication path in the self-organizing network (10) using information on a path route which is available from the first routing protocol;
   - mapping the first cost measure to a second cost measure in accordance with the second routing protocol for subsequent optimised routing between the self-organizing network (10) and the administrator-organized network (12).

2. Method according to claim 1, **characterized in that** the first cost measure is related to a communication path from a mobile node (MN) in the self-organizing network to at least one access router (AR1 AR2) provided for coupling the self-organizing network and the administrator-organized network (12).

3. Method according to claim 2, **characterized in that** it further comprises the steps of:

   - combining the second cost measure with further cost measures according to communication paths from the access router (AR1, AR2) to a corresponding node in the administrator-organized network (12);
   - selecting an overall communication path from the mobile node (MN) to the corresponding node with minimum accumulated cost measure.

4. Method according to one of the claims 1 to 3,
   **characterized in that** the step of calculating the first cost measure and the step of the mapping first cost measure to the second cost measure are repeated on occurrence of a change of topology of the self-organizing network (10).

5. Method according to one of the claims 1 to 4,
   **characterized in that** the mapping from the first cost measure to the second cost measure is achieved using a functional relationship.

6. Method according to one of the claims 1 to 5,
   **characterized in that**

   - the extended network comprises a node for the mobile node (MN) and a node for each access router (AR1, AR2),
   - the second routing protocol is a distance vector routing protocol, and
   - a first cost metric underlying the calculation of the first cost measure is of the same type as a second cost metric underlying the calculation of the second cost measure.

7. Method according to one of the claims 1 to 6,
   **characterized in that**

- the extended network further comprises at least one additional virtual node (VN1, VN2) along a path from the mobile node to at least one access router (AR1, AR2),
- the second routing protocol is a link state routing protocol,
- the first cost metric underlying the calculation of the first cost measure and second cost metric underlying the calculation of the second cost measure is hop count, and
- the mapping is achieved through introduction of virtual nodes (VN1, VN2) between the mobile node and access router, wherein the number of additional virtual nodes is hop count minus one.

8. Method according to one of the claims 1 to 7, **characterized in that**

- the second routing protocol is a link state routing protocol, and
- the first cost metric underlying the calculation of the first cost measure is of the same type as the second cost metric underlying the calculation of the second cost measure.

9. Method according to one of the claims 4 to 6, **characterized in that** a first cost metric underlying the calculation of the first cost measure is of a different type than a second cost metric underlying the calculation of the second cost measure.

10. Routing apparatus for integrating routing between a self-organizing network (10) running a first routing protocol and an administrator-organized network (12) running a second routing protocol, **characterized by**:

- a network modelling unit (38) adapted to model the self-organizing network as extended network topology for adaptation to the second routing protocol;
- a routing unit (26) adapted to run the first routing protocol and the second routing protocol in parallel for evaluation of at least one communication path in the self-organizing network;
- a cost calculation unit (30) adapted to calculate at least one first cost measure for a communication path in the self-organizing network using information on a path route which is available from the first routing protocol; and
- a cost mapping unit (32) adapted to map the first cost measure to a second cost measure in accordance with the second routing protocol for subsequent optimised routing between the self-organizing network and the administrator-organized network.

11. Apparatus according to claim 10, **characterized in that** the cost calculation unit (30) is adapted to calculate the first cost measure for a communication path from a mobile node in the self-organizing network to at least one access router provided for coupling the self-organizing network and the administrator-organized network.

12. Apparatus according to claim 11, **characterized in that** it further comprises:

- a cost combining unit (34) adapted to combine the second cost measure with further cost measures according to communication paths from the access router to a corresponding node in the administrator-organized network; and
- a communication path selection unit (40) adapted to select an overall communication path from the mobile node to the corresponding node with minimum accumulated cost measure.

13. Apparatus according to one of the claims 10 to 12, **characterized in that** the cost calculation unit (30) and the cost mapping unit (32) are adapted to repeat the calculation of the first cost measure and the mapping of the first cost measure to the second cost measure on occurrence of a change of topology of the self-organizing network.

14. Apparatus according to one of the claims 10 to 13, **characterized in that** the cost mapping unit (32) is adapted to process a functional relationship for mapping the first cost measure to the second cost measure.

15. Apparatus according to one of the claims 10 to 14, **characterized in that**

- the network modelling unit (38) is adapted to set up the extended network with a node for the mobile node and a node for each access router,
- the routing unit (26) is adapted to run the second routing protocol as distance vector routing protocol, and
- the cost calculation unit (30) uses a first cost metric for calculation of the first cost measure which is of the same type as a second cost metric used for calculation of the second cost measure.

16. Apparatus according to one of the claims 10 to 14,
    **characterized in that**

    - the network modelling unit (38) is adapted to set up the extended network with at least one virtual node along a path from the mobile node to at least one access router,
    - the routing unit (26) is adapted to run the second routing protocol is a link state routing protocol,
    - the cost calculation unit (30) uses as first cost metric underlying the calculation of the first cost measure and as second cost metric underlying the calculation of the second cost measure hop count, and
    - the cost mapping unit (32) achieves mapping through introduction of virtual nodes between the mobile node and access router, wherein the number of additional virtual nodes is hop count minus one.

17. Apparatus according to one of the claims 10 to 14,
    **characterized in that**

    - the routing unit (26) is adapted to run the second routing protocol as link state routing protocol, and
    - the cost calculation unit (30) uses as first cost metric underlying the calculation of the first cost measure a cost metric which is of the same type as the second cost metric underlying the calculation of the second cost measure.

18. Apparatus according to one of the claims 10 to 14, **characterized in that** the cost calculation unit (30) is adapted to use as first cost metric underlying the calculation of the first cost measure a cost metric which is different from a second cost metric underlying the calculation of the second cost measure.

19. Computer program product directly loadable into the internal memory of a mobile communication unit or of an access router, comprising software code portions for performing the steps of one of the claims 1 to 9, when the product is run on a processor of the mobile communication unit (MN) or access router (AR1, AR2).

**Patentansprüche**

1. Verfahren zum Integrieren von Routing zwischen einem selbstorganisierenden Netzwerk (10), das ein erstes Routing-Protokoll ausführt, und einem administratororganisierten Netzwerk (12), das ein zweites Routing-Protokoll ausführt, **gekennzeichnet durch** die Schritte:

    - Abstrahieren des selbstorganisierenden Netzwerks (10) in eine erweiterte Netzwerktopologie zum Anpassen an das zweite Routing-Protokoll;
    - paralleles Durchführen des ersten Routing-Protokolls und des zweiten Routing-Protokolls zum Evaluieren von mindestens einem Kommunikationspfad in dem selbstorganisierenden Netzwerk;
    - Berechnen von mindestens einer Kostengröße für einen Kommunikationspfad in dem selbstorganisierenden Netzwerk (10) unter Verwendung von Information über eine Pfadroute, die von dem ersten Routing-Protokoll verfügbar ist;
    - Abbilden der ersten Kostengröße auf eine zweite Kostengröße in Übereinstimmung mit dem zweiten Routing-Protokoll zum anschließenden optimierten Routing zwischen dem selbstorganisierten Netzwerk (10) und dem administratororganisierten Netzwerk (12).

2. Verfahren nach Anspruch 1, **dadurch gekennzeichnet, dass** die erste Kostengröße zugehörig ist zu einem Kommunikationspfad von einem mobilen Knoten (MN) in dem selbstorganisierenden Netzwerk zu mindestens einem Zugangsrouter (AR 1, AR2), der bereitgestellt ist zum Koppeln des selbstorganisierenden Netzwerks und des administratororganisierten Netzwerks (12).

3. Verfahren nach Anspruch 2, **dadurch gekennzeichnet, dass** es ferner die Schritte umfasst:

    - Kombinieren der zweiten Kostengröße mit weiteren Kostengrößen gemäß Kommunikationspfaden von dem Zugangsrouter (AR1, AR2) zu einem korrespondierenden Knoten in dem administratororganisierten Netzwerk (12);
    - Auswählen eines Gesamtkommunikationspfads von dem mobilen Knoten (MN) zu dem korrespondierenden Knoten mit minimaler akkumulierter Kostengröße.

**4.** Verfahren nach einem der Ansprüche 1 bis 3, **dadurch gekennzeichnet, dass** der Schritt des Berechnens der ersten Kostengröße und der Schritt des Abbildens der ersten Kostengröße auf die zweite Kostengröße wiederholt werden bei Auftreten einer Veränderung der Topologie des selbstorganisierenden Netzwerks (10).

**5.** Verfahren nach einem der Ansprüche 1 bis 4, **dadurch gekennzeichnet, dass** das Abbilden von der ersten Kostengröße auf die zweite Kostengröße erreicht wird unter Verwendung einer funktionalen Beziehung.

**6.** Verfahren nach einem der Ansprüche 1 bis 5, **dadurch gekennzeichnet, dass**

- das erweiterte Netzwerk einen Knoten für den mobilen Knoten und einen Knoten für jeden Zugangsrouter (AR1, AR2) umfasst,
- das zweite Routing-Protokoll ein Distanzvektor-Routing-Protokoll ist, und
- eine erste Kostenmetrik, die der Berechnung der ersten Kostengröße unterliegt, vom gleichen Typ ist wie eine zweite Kostenmetrik, die der Berechnung der zweiten Kostengröße unterliegt.

**7.** Verfahren nach einem der Ansprüche 1 bis 6, **dadurch gekennzeichnet, dass**

- das erweiterte Netzwerk ferner mindestens einen zusätzlichen virtuellen Knoten (VN1, VN2) entlang eines Pfads von dem mobilen Knoten zu mindestens einem Zugangsrouter (AR1, AR2) umfasst,
- das zweite Routing-Protokoll ein Verbindungszustands-Routing-Protokoll ist,
- die erste Kostenmetrik, die der Berechnung der ersten Kostengröße unterliegt, und die zweite Kostenmetrik, die der Berechnung der zweiten Kostengröße unterliegt, eine Sprungzählung ist, und
- das Abbilden erreicht wird durch Einführen von virtuellen Knoten (VN1, VN2) zwischen dem mobilen Knoten und dem Zugangsrouter, wobei die Anzahl der zusätzlichen virtuellen Knoten die Sprungzählung minus eins ist.

**8.** Verfahren nach einem der Ansprüche 1 bis 7, **dadurch gekennzeichnet, dass**

- das zweite Routing-Protokoll ein Verbindungszustands-Routing-Protokoll ist, und
- die erste Kostenmetrik, die der Berechnung der ersten Kostengröße unterliegt, vom gleichen Typ ist wie die zweite Kostenmetrik, die der Berechnung der zweiten Kostengröße unterliegt.

**9.** Verfahren nach einem der Ansprüche 4 bis 6, **dadurch gekennzeichnet, dass** eine erste Kostenmetrik, die der Berechnung der ersten Kostengröße unterliegt, von einem unterschiedlichen Typ ist wie eine zweite Kostenmetrik, die der Berechnung der zweiten Kostengröße unterliegt.

**10.** Routing-Vorrichtung zum Intergieren von Routing zwischen einem selbstorganisierenden Netzwerk (10), das ein erstes Routing-Protokoll ausführt, und einem administratororganisierten Netzwerk (12), das ein zweites Routing-Protokoll ausführt, **gekennzeichnet durch**:

- eine Netzwerkbildungseinheit (38), die angepasst ist, das selbstorganisierende Netzwerk als erweiterte Netzwerktopologie zum Anpassen des zweiten Routing-Protokolls zu bilden;
- eine Routing-Einheit (26), die angepasst ist zum parallelen Ausführen des ersten Routing-Protokolls und des zweiten Routing-Protokolls zum Evaluieren von mindestens einem Kommunikationspfad in dem selbstorganisierenden Netzwerk;
- eine Kostenberechnungseinheit (30), die angepasst ist zum Berechnen von mindestens einer Kostengröße für einen Kommunikationspfad in dem selbstorganisierenden Netzwerk unter Verwendung von Information über eine Pfadroute, die von dem ersten Routing-Protokoll verfügbar ist;
- eine Kostenabbildungseinheit (329, die angepasst ist zum Abbilden der ersten Kostengröße auf eine zweite Kostengröße in Übereinstimmung mit dem zweiten Routing-Protokoll zum anschließenden optimierten Routing zwischen dem selbstorganisierten Netzwerk und dem administratororganisierten Netzwerk.

**11.** Vorrichtung nach Anspruch 10, **dadurch gekennzeichnet, dass** die Kostenberechnungseinheit (30) angepasst ist zum Berechnen der ersten Kostengröße für einen Kommunikationspfad von einem mobilen Knoten in dem selbstorganisierenden Netzwerk zu mindestens einem Zugangsrouter, der bereitgestellt ist zum Koppeln des selbstorganisierenden Netzwerks und des administratororganisierten Netzwerks.

**12.** Vorrichtung nach Anspruch 11, **dadurch gekennzeichnet, dass** diese ferner umfasst:

- eine Kostenkombinierungseinheit (34), die angepasst ist zum Kombinieren der zweiten Kostengröße mit weiteren Kostengrößen gemäß Kommunikationspfaden von dem Zugangsrouter zu einem korrespondierenden Knoten in dem administratororganisierten Netzwerk; und
- eine Kommunikationspfadauswahleinheit (40), die angepasst ist zum Auswählen eines Gesamtkommunikationspfads von dem mobilen Knoten zu dem korrespondierenden Knoten mit minimaler akkumulierter Kostengröße.

**13.** Vorrichtung nach einem der Ansprüche 10 bis 12, **dadurch gekennzeichnet, dass** die Kostenberechnungseinheit (30) und die Kostenabbildungseinheit (32) angepasst sind zum Wiederholen der Berechnung der ersten Kostengröße und des Abbildens der ersten Kostengröße auf die zweite Kostengröße beim Auftreten einer Veränderung der Topologie des selbstorganisierenden Netzwerks.

**14.** Vorrichtung nach einem der Ansprüche 10 bis 13, **dadurch gekennzeichnet, dass** die Kostenabbildungseinheit (30) angepasst ist zum Bearbeiten einer funktionalen Beziehung zum Abbilden der ersten Kostengröße auf die zweite Kostengröße.

**15.** Vorrichtung nach einem der Ansprüche 10 bis 14,
**dadurch gekennzeichnet, dass**

- die Netzwerkbildungseinheit (38) angepasst ist zum Aufbauen des erweiterten Netzwerks mit einem Knoten für den mobilen Knoten und einem Knoten für jeden Zugangsrouter,
- die Routing-Einheit (26) angepasst ist zum Ausführen des zweiten Routing-Protokolls als ein Distanzvektor-Routing-Protokoll, und
- die Kostenberechnungseinheit (30) eine erste Kostenmetrik verwendet zum Berechnen der ersten Kostengröße, die vom gleichen Typ ist wie die zweite Kostenmetrik, die für die Berechnung der zweiten Kostengröße verwendet wird.

**16.** Vorrichtung nach einem der Ansprüche 10 bis 14,
**dadurch gekennzeichnet, dass**

- die Netzwerkbildungseinheit (38) angepasst ist zum Aufbauen des erweiterten Netzwerks mit mindestens einem virtuellen Knoten entlang des Pfads von dem mobilen Knoten zu mindestens einem Zugangsrouter,
- die Routing-Einheit (26) angepasst ist zum Ausführen des zweiten Routing-Protokolls als ein Verbindungszustands-Routing-Protokoll,
- die Kostenberechnungseinheit (32) als eine erste Kostenmetrik, die der Berechnung der ersten Kostengröße unterliegt, und als eine zweite Kostenmetrik, die der Berechnung der zweiten Kostengröße unterliegt, Sprungzählung verwendet, und
- die Kostenabbildungseinheit (32) Abbilden erreicht durch Einführen von virtuellen Knoten zwischen dem mobilen Knoten und dem Zugangsrouter, wobei die Anzahl von zusätzlichen virtuellen Knoten die Sprungzählung minus eins ist.

**17.** Vorrichtung nach einem der Ansprüche 10 bis 14,
**dadurch gekennzeichnet, dass**

- die Routing-Einheit (26) angepasst ist zum Ausführen des zweiten Routing-Protokolls als Verbindungszustands-Routing-Protokoll, und
- die Kostenberechnungseinheit (30) als erste Kostenmetrik, die der Berechnung der ersten Kostengröße unterliegt, eine Kostenmetrik verwendet, die vom gleichen Typ ist wie die zweite Kostenmetrik, die der Berechnung der zweiten Kostengröße unterliegt.

**18.** Vorrichtung nach einem der Ansprüche 10 bis 14, **dadurch gekennzeichnet, dass** die Kostenberechnungseinheit (30) angepasst ist als erste Kostenmetrik, die der Berechnung der ersten Kostengröße unterliegt, eine Kostenmetrik zu verwenden, die sich von der zweiten Kostenmetrik unterscheidet, die der Berechnung der zweiten Kostengröße unterliegt.

**19.** Computerprogrammprodukt, das direkt in den internen Speicher einer mobilen Kommunikationseinheit oder eines Zugangsrouters geladen werden kann, das Softwarecodeabschnitte umfasst zum Durchführen der Schritte von einem der Ansprüche 1 bis 9, wenn das Produkt auf einem Prozessor der mobilen Kommunikationseinheit (MN) oder des Zugangsrouters (AR1, AR2) ausgeführt wird.

**Revendications**

1.  Méthode d'intégration de routage entre un réseau d'auto-organisation (10) exécutant un premier protocole de routage et un réseau (12) géré par un administrateur exécutant un second protocole de routage, **caractérisé par** les étapes consistant à:

    - détourner le réseau d'auto-organisation (10) dans une topologie étendue de réseau pour une adaptation au second protocole de routage;
    - exécuter en parallèle le premier protocole de routage et le second protocole de routage pour une évaluation d'au moins un trajet de communication dans le réseau d'auto-organisation;
    - calculer au moins une première mesure de coût pour un trajet de communication dans le réseau d'auto-organisation (10) en utilisant une information sur une route de trajet qui est disponible à partir du premier protocole de routage;
    - tracer la première mesure de coût vers une seconde mesure de coût en fonction du second protocole de routage pour un routage suivant optimalisé entre le réseau d'auto-organisation (10) et le réseau (12) géré par un administrateur.

2.  Méthode selon la revendication 1, **caractérisée en ce que** la première mesure de coût est relative à un trajet de communication depuis un noeud mobile (MN) existant dans le réseau d'auto-organisation vers au moins un routeur d'accès (AR1, AR2) prévu pour coupler le réseau d'auto-organisation et le réseau (12) géré par un administrateur.

3.  Méthode selon la revendication 2, **caractérisée en ce qu'**elle comprend en outre les étapes consistant à:

    - combiner la seconde mesure de coût avec des mesures de coûts supplémentaires en fonction de trajets de communication depuis le routeur d'accès (AR1, AR2) vers un noeud correspondant existant dans le réseau (12) géré par un administrateur;
    - sélectionner un trajet de communication global depuis le noeud mobile (MN) vers le noeud correspondant ayant une mesure minimale de coût accumulé.

4.  Méthode selon une des revendications 1 à 3, **caractérisée en ce que** l'étape de calcul de la première mesure de coût et l'étape du traçage de la première mesure de coût vers la seconde mesure de coût sont répétées à l'occasion d'une modification survenant dans la topologie du réseau d'auto-organisation (10).

5.  Méthode selon une des revendications 1 à 4, **caractérisée en ce que** le traçage depuis la première mesure de coût vers la seconde mesure de coût est effectué en utilisant un rapport fonctionnel.

6.  Méthode selon une des revendications 1 à 5,
    **caractérisée en ce que**

    - le réseau étendu comprend un noeud pour le noeud mobile (MN) et un noeud pour chaque routeur d'accès (AR1, AR2),
    - le second protocole de routage est un protocole de routage à vecteur de distance, et
    - un premier système de mesure de coût servant de base au calcul de la première mesure de coût est du même type qu'un second système de mesure de coût servant de base au calcul de la seconde mesure de coût.

7.  Méthode selon une des revendications 1 à 6,
    **caractérisée en ce que**

    - le réseau étendu comprend en outre au moins un noeud virtuel supplémentaire (VN1, VN2) situé le long d'un trajet depuis le noeud mobile vers au moins un routeur d'accès (AR1, AR2),
    - le second protocole de routage est un protocole de routage d'état de liaison,
    - le premier système de mesure de coût servant de base au calcul de la première mesure de coût et le second système de mesure de coût servant de base au calcul de la seconde mesure de coût est un comptage de sauts, et

**15**

- le traçage est effectué par l'introduction de noeuds virtuels (VN1, VN2) entre le noeud mobile et un routeur d'accès, dans laquelle le nombre de noeuds virtuels supplémentaires est le nombre compté de sauts moins un.

**8.** Méthode selon une des revendications 1 à 7, **caractérisée en ce que**

- le second protocole de routage est un protocole de routage d'état de liaison, et
- le premier système de mesure de coût servant de base au calcul de la première mesure de coût est du même type que le second système de mesure de coût servant de base au calcul de la seconde mesure de coût.

**9.** Méthode selon une des revendications 4 à 6, **caractérisée en ce qu'**un premier système de mesure de coût servant de base au calcul de la première mesure de coût est d'un type différent d'un second système de mesure de coût servant de base au calcul de la seconde mesure de coût.

**10.** Dispositif de routage destiné à intégrer un routage entre un réseau d'auto-organisation (10) exécutant un premier protocole de routage et un réseau (12) géré par un administrateur exécutant un second protocole de routage, **caractérisé par**:

- une unité (38) de modélisation du réseau adaptée pour modéliser le réseau d'auto-organisation comme une topologie étendue de réseau en vue d'une adaptation au second protocole de routage;
- une unité de routage (26) adaptée pour exécuter en parallèle le premier protocole de routage et le second protocole de routage pour une évaluation d'au moins un trajet de communication dans le réseau d'auto-organisation;
- une unité (30) de calcul de coût adaptée pour calculer au moins une première mesure de coût pour un trajet de communication dans le réseau d'auto-organisation en utilisant une information sur une route de trajet qui est disponible pour le premier protocole de routage; et
- une unité (32) de traçage du coût adaptée pour tracer la première mesure de coût vers une seconde mesure de coût en fonction du second protocole de routage pour un routage optimalisé suivant entre le réseau d'auto-organisation et le réseau géré par un administrateur.

**11.** Dispositif selon la revendication 10, **caractérisé en ce que** l'unité (30) de calcul du coût est adaptée pour calculer la première mesure de coût pour un trajet de communication depuis un noeud mobile existant dans le réseau d'auto-organisation vers au moins un routeur d'accès prévu pour coupler le réseau d'auto-organisation et le réseau géré par un administrateur.

**12.** Dispositif selon la revendication 11, **caractérisé en ce qu'**il comprend en outre:

- une unité (34) de combinaison des coûts adaptée pour combiner la seconde mesure de coût avec d'autres mesures de coûts en fonction de trajets de communication depuis le routeur d'accès vers un noeud correspondant existant dans le réseau géré par un administrateur; et
- une unité (40) de sélection de trajet de communication adaptée pour sélectionner un trajet de communication global depuis le noeud mobile vers le noeud correspondant avec une mesure minimale de coûts accumulés.

**13.** Dispositif selon une des revendications 10 à 12, **caractérisé en ce que** l'unité (30) de calcul du coût et l'unité (32) de traçage du coût sont adaptées pour répéter le calcul de la première mesure de coût et le traçage de la première mesure de coût vers la seconde mesure de coût à l'occasion d'une modification survenant dans la topologie du réseau d'auto-organisation.

**14.** Dispositif selon une des revendications 10 à 13, **caractérisé en ce que** l'unité (32) de traçage du coût est adaptée pour traiter un rapport fonctionnel en vue de tracer la première mesure de coût vers la seconde mesure de coût.

**15.** Dispositif selon une des revendications 10 à 14, **caractérisé en ce que**

- l'unité (38) de modélisation du réseau est adaptée pour agencer le réseau étendu avec un noeud pour le noeud mobile et un noeud pour chaque routeur d'accès,
- l'unité de routage (26) est adaptée pour exécuter le second protocole de routage comme un protocole de routage à vecteur de distance, et

- l'unité (30) de calcul du coût utilise un premier système de mesure de coût pour le calcul de la première mesure de coût qui est du même type qu'un second système de mesure de coût utilisé pour le calcul de la seconde mesure de coût.

**16.** Dispositif selon une des revendications 10 à 14, **caractérisé en ce que**

- l'unité (38) de modélisation du réseau est adaptée pour agencer le réseau étendu avec au moins un noeud virtuel situé le long d'un trajet depuis le noeud mobile vers au moins un routeur d'accès,
- l'unité de routage (26) est adaptée pour exécuter le second protocole de routage qui est un protocole de routage d'état de liaison,
- l'unité (30) de calcul du coût utilise comme premier système de mesure de coût servant de base au calcul de la première mesure de coût et comme second système de mesure de coût servant de base au calcul de la seconde mesure de coût un comptage de sauts, et
- l'unité (32) de traçage du coût effectue un traçage par l'introduction de noeuds virtuels entre le noeud mobile et un routeur d'accès, dans lequel le nombre de noeuds virtuels supplémentaires est le nombre compté de sauts moins un.

**17.** Dispositif selon une des revendications 10 à 14, **caractérisé en ce que**

- l'unité de routage (26) est adaptée pour exécuter le second protocole de routage comme protocole de routage d'état de liaison, et
- l'unité (30) de calcul du coût utilise comme premier système de mesure de coût servant de base au calcul de la première mesure de coût un système de mesure de coût qui est du même type que le second système de mesure de coût servant de base au calcul de la seconde mesure de coût.

**18.** Dispositif selon une des revendications 10 à 14, **caractérisé en ce que** l'unité (30) de calcul du coût est adaptée pour utiliser comme premier système de mesure de coût servant de base au calcul de la première mesure de coût un système de mesure de coût qui est différent d'un second système de mesure de coût servant de base au calcul de la seconde mesure de coût.

**19.** Produit programme d'ordinateur pouvant être directement chargé dans la mémoire interne d'une unité de communication mobile ou d'un routeur d'accès, comprenant des parties de codes de logiciel destinées à effectuer les étapes d'une des revendications 1 à 9, lorsque le produit est exécuté sur un processeur de l'unité de communication mobile (MN) ou d'un routeur d'accès (AR1, AR2) .

# FIG.1

EP 1 568 179 B1

# *FIG.2*

## FIG.3

PROTOCOL II

EXTENDED TOPOLOGY
OF SELF-ORGANIZING
NETWORK

COST MEASURE(s)
FOR PATH(s) TO
ACCESS ROUTER(s)

TOPOLOGY OF SELF-
ORGANIZING NETWORK

TOPOLOGY OF
ADMINISTRATOR-
ORGANIZED NETWORK

PROTOCOL I

# *FIG.4*

FUNCTIONAL RELATION f_ij: Mi -> Mj, i= 1, ...., O; j= 1, ...., T

# FIG.5

~24

ROUTING UNIT ~26

COST PROCESSING UNIT ~28

# FIG.6

RUN ROUTING PROTOCOLS OF SELF-ORGANIZING NETWORK AND ADMINISTRATOR-ORGANIZED NETWORKS IN PARALLEL ~S10

DETERMINE COST MEASURE FOR COMMUNICATION PATH IN SELF-ORGANIZING NETWORK ACCORDING TO THE ROUTING PROTOCOL OF THE ADMINISTRATOR-ORGANIZED NETWORK FOR SUBSEQUENT OPTIMIZED ROUTING ~S12

# FIG.7

```
┌─────────────────────────────────────────────┐ ~28
│                                               │
│   ┌───────────────────────────────┐          │
│   │      COST CALCULATION UNIT     │ ~30      │
│   └───────────────────────────────┘          │
│                                               │
│   ┌───────────────────────────────┐          │
│   │       COST MAPPING UNIT        │ ~32      │
│   └───────────────────────────────┘          │
│                                               │
│   ┌───────────────────────────────┐          │
│   │      COST COMBINING UNIT       │ ~34      │
│   └───────────────────────────────┘          │
│                                               │
└─────────────────────────────────────────────┘
```

# FIG.8

```
┌──────────────────────────────────────────┐
│  CALCULATE FIRST COST MEASURE USING       │ ~S14
│  ROUTING PROTOCOL OF SELF-ORGANIZING      │
│  NETWORK                                  │
└──────────────────────────────────────────┘
                    │
                    ▼
┌──────────────────────────────────────────┐
│  MAP FIRST COST MEASURE TO A SECOND       │ ~S16
│  COST MEASURE ACCORDING TO THE ROUTING    │
│  PROTOCOL OF ADMINISTRATOR-ORGANIZED      │
│  NETWORK                                  │
└──────────────────────────────────────────┘
                    │
                    ▼
┌──────────────────────────────────────────┐
│  COMBINE SECOND COST MEASURE WITH         │ ~S18
│  FURTHER COST MEASURES FOR CONSIDERATION  │
│  OF END-TO-END COMMUNICATION PATH COSTS   │
└──────────────────────────────────────────┘
```

# FIG.9

| |
|---|
| PROTOCOL PROCESSING UNIT ~ 36 |
| NETWORK MODELLING UNIT ~38 |
| PATH SELECTION UNIT ~40 |

~ 26

# FIG.11

| |
|---|
| DESTINATION 1,NEXT ROUTER,COST |
| DESTINATION 2,NEXT ROUTER,COST |
| DESTINATION 3,NEXT ROUTER,COST |
| ⋮ |

| |
|---|
| DESTINATION 1,PATH NODE(s),COST |
| DESTINATION 2,PATH NODE(s),COST |
| DESTINATION 3,PATH NODE(s),COST |
| ⋮ |

# FIG.10

START

↓

RUN ROUTING PROTOCOL OF SELF-ORGANIZING NETWORK AND ADMINISTRATOR NETWORK USING APPROPRIATE ROUTING TABLES — S20

↓

ABSTRACT SELF-ORGANIZED NETWORK INTO AN EXTENDED NETWORK TOPOLOGY FOR ADAPTION TO THE ROUTING PROTOCOL OF THE ADMINISTRATOR-ORGANIZED NETWORK — S22

↓

SELECT OVERALL OPTIMIZED COMMUNICATION PATH IN VIEW OF COST MEASURE DETERMINED THROUGH USE OF THE EXTENDED NETWORK TOPOLOGY — S24

↓

CHANGE OF TOPOLOGY IN SELF-ORGANIZED NETWORK ? — S26

↓

STOP

# FIG.12

**FIG.13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **APOSTOLOPOULOS et al.** Qos routing mechanisms and OSPF extension. *IETF RFC,* August 1999, vol. 2676